## Europäisches Patentamt

## European Patent Office

## Office européen des brevets

(19)

(11) Veröffentlichungsnummer: **0 121 844**
**B1**

(12)

# EUROPÄISCHE PATENTSCHRIFT

(45) Veröffentlichungstag der Patentschrift:
12.06.87

(51) Int. Cl.⁴: **B 25 J 17/02**

(21) Anmeldenummer: **84103246.9**

(22) Anmeldetag: **23.03.84**

(54) **Robotergelenk.**

(30) Priorität: **06.04.83 DE 3312377**

(43) Veröffentlichungstag der Anmeldung:
**17.10.84 Patentblatt 84/42**

(45) Bekanntmachung des Hinweises auf die Patenterteilung:
**12.06.87 Patentblatt 87/33**

(84) Benannte Vertragsstaaten:
**AT BE CH DE FR GB IT LI SE**

(56) Entgegenhaltungen:
**EP-A-0 065 859**
**DE-A-1 931 817**
**DE-A-2 537 800**
**DE-B-1 041 307**
**FR-A-2 315 629**
**US-A-3 893 573**
**US-A-4 073 201**

(73) Patentinhaber: **Manutec Gesellschaft für Automatisierungs- und Handhabungssysteme mbH, Gründlacher Strasse 248, D-8510 Fürth (DE)**

(72) Erfinder: **Eberle, Manfred, Würzburger Ring 70, D-8520 Erlangen (DE)**
Erfinder: **Kleemann, Robert, Volckamer Strasse 9, D-8520 Erlangen (DE)**

(74) Vertreter: **Mehl, Ernst, Dipl.- Ing., Postfach 22 01 76, D-8000 München 22 (DE)**

## Beschreibung

Die Erfindung bezieht sich auf ein Robotergelenk mit im Gehäuse eingebautem elektrischen Antriebsmotor und Untersetzungsgetriebe, bei dem
a) das abtreibende Ritzel des Untersetzungsgetriebes in ein Zahnrad eingreift, mit dem koaxial ein Anbauflansch verbunden ist;
b) der Anbauflansch für ein nachfolgendes Bauteil des Roboters durch Lager in einem Gehäuse geführt ist.

Eine solche Konstruktion ist im Prinzip aus der FR-A-2 315 629 bekannt.

Bei dieser Lösung ist in einem zylindrischen Gehäuse koaxial ein Untersetzungsgetriebe (Harmonic Drive) doppelt gelagert. Das Spiel der hierbei verwendeten Kugellager ist über Schrauben einstellbar. Das Getriebe wird über ein Eingangszahnrad von einem angebauten Motor angetrieben.

Zur Spielverminderung bei Lagern ist es auch bekannt, die Lager mittels Federn vorzuspannen (vergl. z.D. DE-A1-1 931 817).

Hinsichtlich weiterer Ausführungsformen von Gelenkrobotern und Gelenkkonstruktionen wird z.B. auf die DE-AS 25 26 504, DE-AS 11 48 721 und die europäischen Patentanmeldungen 22 332 und 48 905 verwiesen.

Industrieroboter sollen folgenden Anforderungen genügen:

Sie sollten modular als Baukastensystem aufbaubar sein, relativ wenig Platz benötigen, montage- und wartungsfreundlich sein und gleichzeitig eine hohe Verfahrgeschwindigkeit mit hoher Positioniergenauigkeit vereinen.

Eine hohe Wiederholbarkeit der Positionierungsvorgänge bei einem modularen System erfordert dabei, daß die einzelnen Gelenke, vor allem am Beginn des Roboterarms, möglichst spielfrei sind. Diese Forderung läßt sich im allgemeinen nicht ohne weiteres mit einem platzsparenden Aufbau des Gelenks vereinen.

Die Aufgabe der vorliegenden Erfindung besteht darin, unter Zuhilfenahme handelsüblicher Maschinenteile ein möglichst spielfreies und kompakt bauendes Robotergelenk im Rahmen eines modularen Baukastensystems zu schaffen.

Diese Aufgabe wird erfindungsgemäß durch folgende Merkmale gelöst:
c) zwischen Anbauflansch und Gehäuseteil ist ein unter Federspannung stehendes Kegelrollenlager angeordnet und
d) zwischen Gehäuseteil und einer Ringschulter des Anbauflansches ist ein zusätzliches, ebenfalls unter Federvorspannung stehendes Axiallager vorgesehen, dessen Durchmesser nahezu dem Gelenkdurchmesser entspricht.

Als Antriebsmotor wird ferner mit Vorteil ein permanenterregter Drehstrommotor benutzt, der auf der dem Getriebe abgewandten Seite gleichzeitig auch noch den Weggeber für die Lageregelung und Drehzahlführung trägt.

Durch die vorstehend beschriebenen Merkmale erhält man ein Gelenk, das sich für den modularen Aufbau eines Roboters eignet und eine hohe Positioniergenauigkeit garantiert.

Anhand eines in der Zeichnung dargestellten Ausführungsbeispiels sei die Erfindung näher beschrieben; es zeigen:
Figur 1 eine Seitenansicht eines Industriegelenkroboters,
Figur 2 eine Draufsicht auf den Roboter nach Figur 1,
Figuren 3 und 4 Längsschnitte durch Gelenke zwischen Ständer und Oberarm,
Figur 5 einen Schnitt durch das Gelenk zwischen Ober- und Vorderarm und
Figur 6 einen Längsschnitt durch drei aneinandergesteckte Gelenke zwischen Unterarm und Greifer.

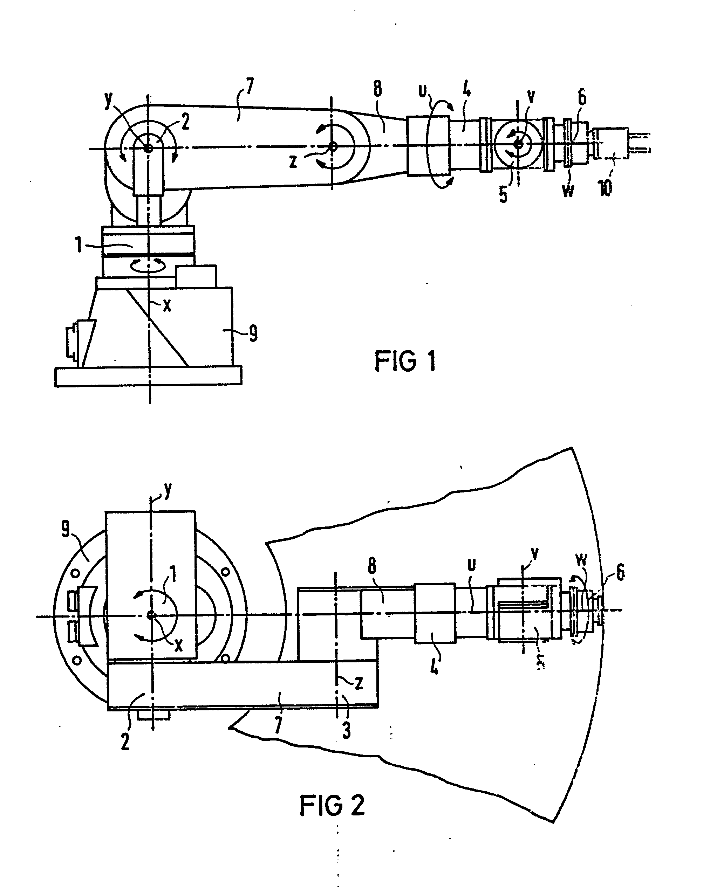

Bei dem in Figur 1 und 2 schematisch dargestellten Industrie-Gelenkroboter sitzt auf einem Ständersockel 9 das Gelenk 1 (Rumpfgelenk), durch das eine Drehung um die x-Achse in einem Bereich von z.B. 400° möglich ist. Mit diesem Gelenk 1 ist ein Gelenk 2 (Schultergelenk) verschraubt, durch das eine Drehung um die senkrecht zur x-Achse liegende y-Achse in einem Bereich von z.B. 250° möglich ist.

An diesem Gelenk 2 ist seitlich der Oberarm 7 befestigt. Dieser trägt am anderen Ende das Gelenk 3, durch das eine Drehung von z.B. 320° um die senkrecht zur Armlängsrichtung liegende z-Achse möglich ist. Die z-Achse und y-Achse liegen dabei parallel zueinander.

Am Gelenk 3 ist der parallel zum Oberarm 7 geführte Vorderarm 8 befestigt. An diesen Vorderarm schließen sich drei Gelenke 4, 5 und 6 an, die zur Drehung um 300°, 180° und 540° in den Drehachsen u, v und w dienen.

Am Gelenk 6 ist der eigentliche Greifer 10 (Hand) befestigbar.

Wie ersichtlich, liegen jeweils die Achsen x, u und w in der gleichen Ebene, während die Achsen y und z parallel zueinander sind.

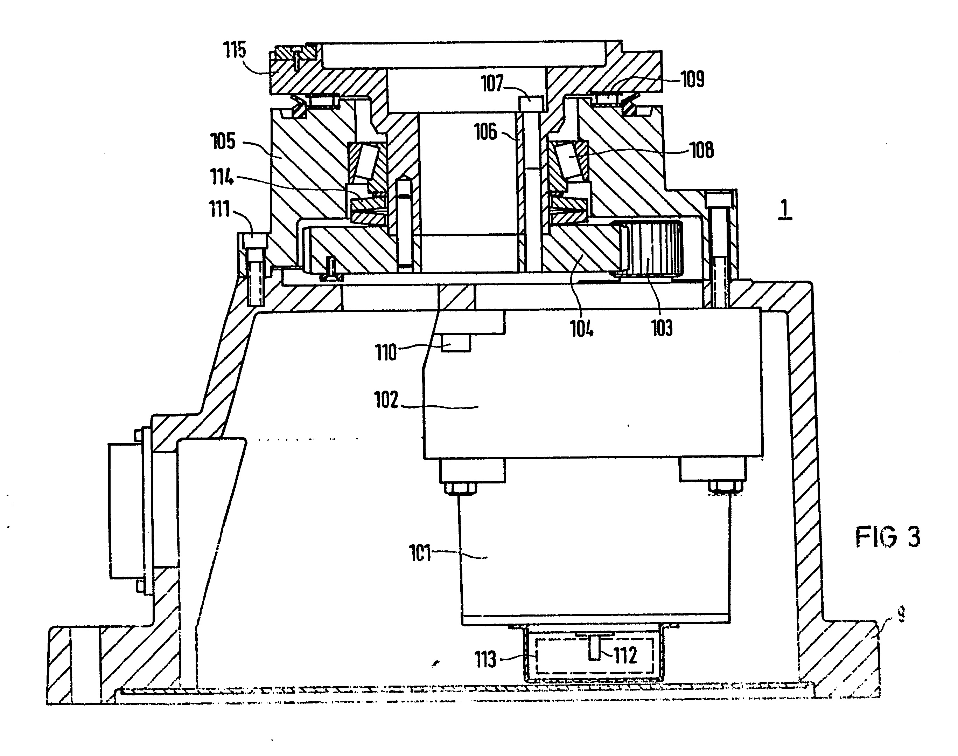

Figur 3 zeigt einen Schnitt durch das Gelenk 1 mit Sockel 9. Wie ersichtlich, ist der im Sockelinnern angeordnete elektrische Antriebsmotor 101 samt Untersetzungsgetriebe 102 mittels Schraubverbindungen 110 mit dem Sockel verschraubt. Auf das Wellenende 112 des Motors 101 ist noch ein gestrichelt angedeuteter Weggeber 113 aufsteckbar. Der Antriebsmotor 101 ist ein Drehstrommotor mit Permanenterregung und relativ niedrigem Trägheitsmoment.

Das Abtriebsritzel 103 des Getriebes 102 greift in ein Zahnrad 104 ein. Dieses Zahnrad 104 ist über Schraubverbindungen 107 mit einem koaxialen Anbauflansch 106 fest verbunden. Der als Drehteil ausgebildete Anbauflansch 106 und das Zahnrad 104 sind im Lagergehäuse 105, das einen Teil des Gelenkgehäuses bildet, axial und radial geführt, und zwar axial über das Nadellager 109 und axial und radial über ein Kegelrollenlager 108. Die Lager 108 und 109 stehen dabei durch eine Feder 114 unter Vorspannung. Das Lager 108 wird unmittelbar durch die Feder 114 vorgespannt und das Lager 109 über Zahnrad 104 und Anbauflansch 106. Da der Anbauflansch 106 fest am Lagergehäuse auf einem Nadellagerkranz von nahezu Gelenkdurchmesser geführt ist, läßt sich in Verbindung mit dem Kegelrollenlager eine weitgehende Spielfreiheit erreichen.

Nach Lösen der Schraubverbindungen 11 können das Lagergehäuse 105 und die mit ihm verbundenen Teile vom Ständersockel 9 abgehoben werden.

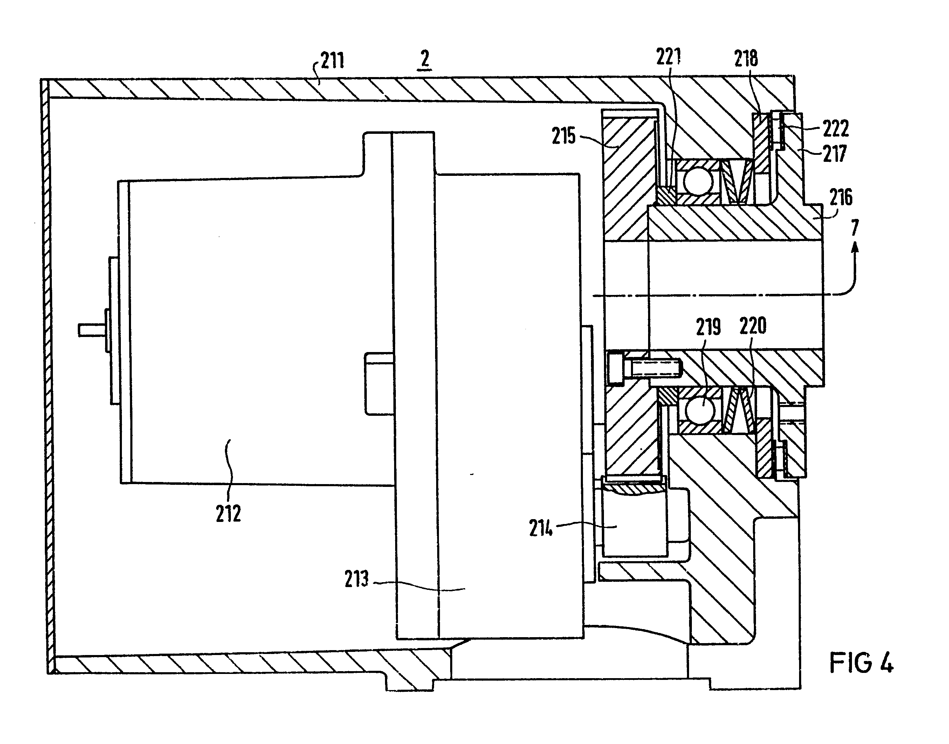

Der Anbauflansch 106 des Gelenkes 1 ist an seiner Schulter 115 mit dem in Figur 4 gezeigten Gelenk 2 verschraubbar, und zwar mit dem rohrförmigen Gehäuse 211 des Gelenks 2.

Der im Gelenk 2 eingebaute elektrische Antriebsmotor 212 treibt über ein Untersetzungsgetriebe 213 ein Ritzel 214, das in ein Zahnrad 215 eingreift. Dieses Zahnrad 215 ist mit einem koaxialen Flansch 216 verschraubt. Die Ringschulter 217 dieses Flansches 216 ist über ein Nadellager 222 auf einem mit dem Gelenkgehäuse verschraubten Druckring 218 axial geführt. Zur radialen Führung des Flansches 216 dient ein Kugellager 219, das durch eine sich am Druckring 218 abstützende Feder 220 vorgespannt ist. Gleichzeitig steht hierdurch über Ring 221, Zahnrad 215 und Flansch 216 auch das Lager 222 unter Vorspannung, so daß eine straffe Lagerung gesichert ist.

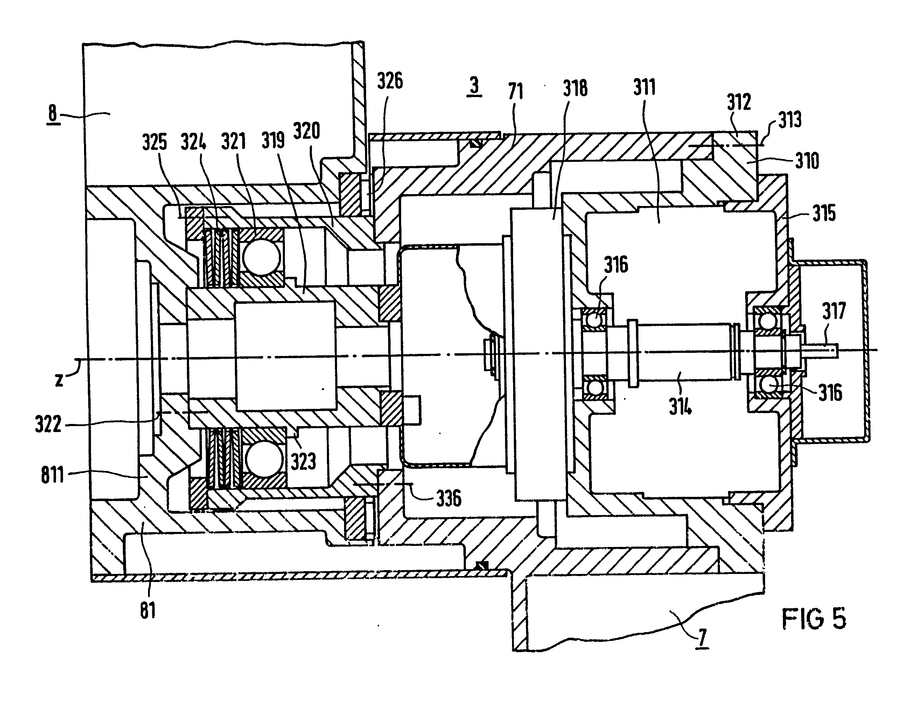

Figur 5 zeigt das Gelenk 3 zwischen Oberarm 7 und Vorderarm 8 zur Drehung um die z-Achse. Das Gelenkgehäuse wird im wesentlichen durch zwei zentrisch aneinandergrenzende rohrförmige Endteile 71 und 81 des Oberarmes 7 und des Vorderarmes 8 gebildet.

Im Endteil 71 ist das Gehäuse 310 des elektrischen Antriebsmotors 311 bis zur Ringschulter 312 eingeschoben und hier über angedeutete Schraubverbindungen 313 mit dem Teil 71 verschraubt.

Die Welle 314 des Motors 311 ist in einem im Gehäuse 310 und einem im Lagerdeckel 315 angeordneten Kugellager 316 geführt. Die Welle 314 ist an einem Ende 317 mit Aufnahmegewinden für nicht dargestellte Weg- bzw. Drehzahlgeber versehen und trägt am anderen Ende koaxial ein Untersetzungsgetriebe 318 (Harmonic Drive). An das Untersetzungsgetriebe 318 ist ein vom Teil 81 koaxial umfaßter, in der Wellenlängsachse liegender zylindrischer Mitnehmer 319 angeschraubt, der in einem am Teil 71 befestigten koaxialen Tragrohr 320 mittels eines mittig zum Vorderarm liegenden Kugellagers 321 geführt ist. Das an einer umlaufenden Schulter 323 des Mitnehmers 319 anliegende Kugellager 321 steht dabei unter der Vorspannung einer Druckfeder 324, die sich an dem mit dem Tragrohr 320 verschraubten Druckring 325 abstützt.

Das Ende des Mitnehmers 319 ist mit dem Kupplungsteil 811 des Endteils 81 des Vorderarms 8 über angedeutete Schraubverbindungen 336 verbunden.

Zusätzlich ist der Vorderarm 8 noch durch ein Axiallager 326 geführt, das zwischen den aneinandergrenzenden Ringflächen der Teile 71 und 81 angeordnet ist und ebenfalls unter der kompensierenden Vorspannung der Feder 324 steht.

Der Vorderarm 8 kann nach Lösen der Schraubverbindungen 322 vom Gelenk 3 gelöst werden.

Motor 312, Getriebe 318 und Mitnehmer 319 können nach Lösen der gestrichelt angedeuteten Schraubverbindungen 313 aus dem Teil 71 herausgezogen werden.

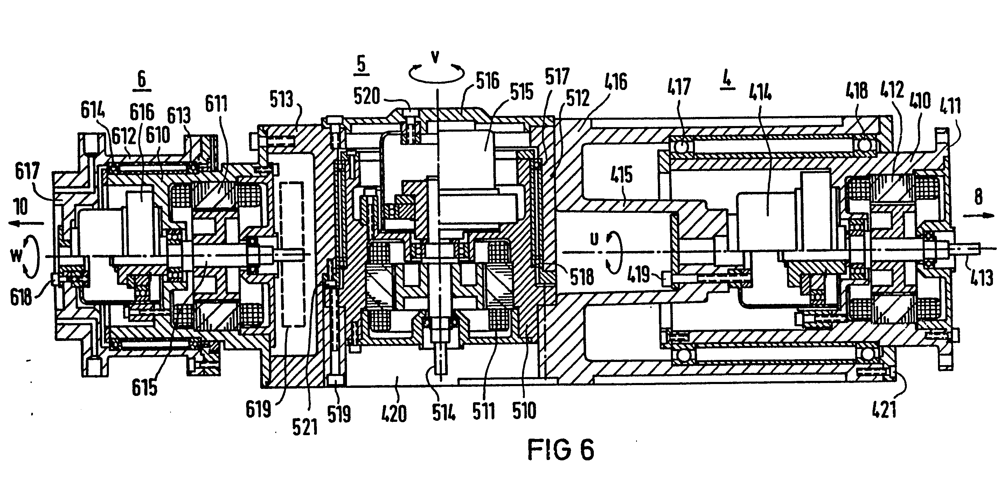

Figur 6 zeigt die drei aneinandergesteckten Gelenke 4 bis 6 zwischen Vorderarm 8 und Greifer 10, mit denen Drehungen um die Achsen u, v und w möglich sind.

Wie ersichtlich, besteht das Gelenk 4 aus einem rohrförmigen Innenteil 410, das über einen Flansch 411 mit dem Vorderarm 8 verschraubbar ist. Das Innenteil 410 (Drehteil) bildet gleichzeitig das Gehäuse des elektrischen Antriebsmotors 412. Dieser ist ein Drehstrommotor mit Permanenterregung und niedrigem Trägheitsmoment und ist zunächst dem Gelenk 3 angeordnet, so daß seine Massen hinsichtlich einer Biegebeanspruchung möglichst wenig zur Geltung kommen.

Die Welle 413 des Motors 412 treibt ein koaxial an den Motor anschließendes, am Innenteil befestigtes Untersetzungsgetriebe 414 (Harmonic Drive), dessen abtreibender Teil mit dem Flansch 415 des rohrförmigen, das Innenteil 410 koaxial umgebenden rohrförmigen Außenteils 416 (Drehteil) verschraubt ist. Das Außenteil 416 ist dabei über zwei auf Abstand gehaltende Kugellager 417 und 418 am Innenteil 410 geführt. Der Abstand der beiden Kugellager 417 und 418 ist so gewählt, daß möglichst hohe Momente gut aufgenommen werden können.

Nach Lösen der angedeuteten Schraubverbindungen 419 und 421 kann das Innenteil samt Motor 412 und Getriebe 414 aus dem Außenteil 416 herausgezogen werden.

Der Außenteil 416 hat ein angesetztes Tragteil 420, in dem das Gelenk 5 sitzt.

Das Gelenk 5 besteht ebenfalls aus einem rohrförmigen, mit dem seitlichen Tragteil 420 verschraubten Innenteil 510, das gleichzeitig das Gehäuse des elektrischen Antriebsmotors 511 bildet und einen das Innenteil 510 koaxial umgebenden rohrförmigen Außenteil 512 mit einem senkrecht angesetzten, ebenfalls rohrförmigen Anbauträgerteil 513. Die Motorwelle 514 ist über das angebaute Untersetzungsgetriebe 515 und einen damit abtriebsseitig verbundenen Lagerdeckel 516 mit dem Äußenteil 512 gekuppelt.

Innenteil 510 und Außenteil 512 sind ebenfalls wieder über Kugellager 517 und 518 gegeneinander abgestützt. Nach Lösen der angedeuteten Schraubverbindungen 519 kann das Gelenk 5 aus dem Gelenk 4 herausgezogen werden.

Nach Lösen der Schraubverbindungen 520 und 521 kann das Innenteil 510 samt Motor und Getriebe aus dem Außenteil 512 herausgezogen werden.

Das Gelenk 6 besteht aus dem mit dem Anbauträgerteil 513 des Gelenkes verschraubbaren rohrförmigen Innenteil 610, das ebenfalls gleichzeitig das Gehäuse des elektrischen Antriebsmotors 611 bildet, und aus einem dieses Innenteil koaxial umgebenden rohrförmigen Außenteil 612, das über auf Abstand gehaltene Kugellager 613 und 614 am Innenteil abgestützt ist. Die Antriebsverbindung zwischen Motorwelle 615 und Außenteil 612 läuft über das koaxial angebaute Untersetzungsgetriebe 616, mit dessen abtreibenden Teil der Kupplungsflansch 617 des Außenteils 612 verschraubt ist. Nach Lösen der Schraubverbindungen 618 kann das Innenteil 610 mit Motor und Getriebe aus dem Außenteil 612 herausgezogen werden.

Wie gestrichelt angedeutet, ist hierbei, wie auch bei allen anderen Gelenken, auf der dem Getriebe abgewandten Seite der Motorwelle 615 ein Weggeber 619 angeordnet.

Die vorstehend beschriebene Konstruktion zeichnet sich durch einen platzsparenden Aufbau, hohe Wartungsfreundlichkeit und hohe Positioniergenauigkeit aus.

## Patentansprüche

1. Robotergelenk mit im Gehäuse eingebautem elektrischen Antriebsmotor und Untersetzungsgetriebe, bei dem
   a) das abtreibende Ritzel (103) des Untersetzungsgetriebes (102) in ein Zahnrad (104) eingreift, mit dem koaxial ein Anbauflansch (106) verbunden ist;
   b) der Anbauflansch für ein nachfolgendes Bauteil des Roboters durch Lager (108, 109) in einem Gehäuse (105) geführt ist,
   gekennzeichnet durch folgende Merkmale:
   c) zwischen Anbauflansch (106) und Gehäuseteil (105) ist ein unter Federvorspannung stehendes Kegelrollenlager (108) angeordnet und
   d) zwischen Gehäuseteil (105) und einer Ringschulter (115) des Anbauflansches (106) ist ein zusätzliches, ebenfalls unter Federvorspannung stehendes Axiallager (109) vorgesehen, dessen Durchmesser nahezu dem Gelenkdurchmesser entspricht.

2. Robotergelenk nach Anspruch 1, dadurch gekennzeichnet, daß der Antriebsmotor (101) ein Drehstrommotor ist und auf der dem Getriebe abgewandten Seite einen Weggeber (113) trägt.

3. Robotergelenk nach Anspruch 1, dadurch gekennzeichnet, daß Motor, Getriebe und Lagerung über Schraubverbindungen (111, 110) lösbar zusammengehalten sind.

## Claims

1. A robot joint with an electrical driving motor and reduction gearing incorporated in the housing wherein
   a) the driving pinion (103) at the output end of the reduction gearing (102) meshes with a cog (104) with which a mounting flange (106) is connected coaxially,
   b) the mounting flange for a following component of the robot is guided by bearings (108, 109) in a housing (105),
   characterised by the following features:
   c) a tapered roller bearing (108) under spring pre-loading is disposed between the mounting flange (106) and the housing part (105) and
   d) an additional axial bearing (109) which is also under spring pre-loading and the diameter of which almost corresponds to the diameter of the joint is provided between the housing part (105) and an annular shoulder (115) of the mounting flange (106).

2. A robot joint as claimed in Claim 1, characterised in that the driving motor (101) is a three-phase motor and carries a movement pickup (113) on the side remote from the gearing.

3. A robot joint as claimed in Claim 1, characterised in that the motor, gearing and bearings are held together detachably by means of threaded connections (111, 110).

## Revendications

1. Joint articulé pour robot comportant un moteur électrique d'entraînement et un démultiplicateur, logés dans un carter, et dans lequel
   a) le pignon mené (103) du démultiplicateur (102) engrène avec une roue dentée (104), à laquelle est relié coaxialement une bride rapportée (106),
   b) la bride rapportée prévue pour un composant, situé en aval, du robot est guidée par des paliers (108, 109) dans un carter (105),
   caractérisé par les caractéristiques suivantes:
   c) entre la bride rapportée (106) et l'élément (105) du carter se trouve disposé un palier à rouleaux coniques (108) précontraint par un ressort, et
   d) entre l'élément (105) du carter et un épaulement annulaire (104) de la bride rapportée (106) il est prévu un palier axial supplémentaire (109) également précontraint par un ressort et dont le diamètre correspond approximativement au diamètre du joint articulé.

2. Joint articulé pour robot suivant la revendication 1, caractérisé par le fait que le moteur d'entraînement (101) est un moteur à courant triphasé et entraîne, sur son côté situé à l'opposé du démultiplicateur, un capteur de distance (113):

3. Joint articulé pour robot suivant la revendication 1, caractérisé par le fait que le moteur, le démultiplicateur et les paliers sont réunis de façon détachable par l'intermédiaire de liaisons à vis (111, 110).

FIG 1

FIG 2

FIG 3

0 121 844

115
109
107
105
106
108
114
111
1
104
103
110
102
101
113 112

FIG 4

0 121 844

FIG 5

FIG 6